# EUROPEAN PATENT SPECIFICATION

(11) **EP 3 697 232 B1**
(45) Date of publication and mention of the grant of the patent: **20.04.2022**
(21) Application number: 18796379.8
(22) Date of filing: 19.10.2018
(51) Int. Cl.: A23L 15/00, A23L 17/00, A23L 29/212

(54) **TEXTURISED SEAFOOD ANALOGUE PRODUCTS, USE OF PEA STARCH AND POTATO STARCH TO REPLACE EGG WHITE AND METHOD OF PREPARATION**
TEXTURISIERTE, ANALOGE MEERESFRÜCHTEERZEUGNISSE, VERWENDUNG VON ERBSENSTÄRKE UND KARTOFFELSTÄRKE ALS EIWEISSERSATZ UND HERSTELLUNGSVERFAHREN
PRODUITS TEXTURÉS ANALOGUES DE FRUITS DE MER, UTILISATION DE L'AMIDON DE PETITS POIS ET DE L'AMIDON DE POMMES DE TERRE POUR REMPLACER LE BLANC D'OEUF ET PROCÉDÉ DE PRÉPARATION

(30) Priority: 19.10.2017 EP 17197265
(43) Date of publication of application: 26.08.2020
(73) Proprietor: Cosucra Groupe Warcoing S.A., 7740 Warcoing (BE)
(72) Inventor: DESCAMPS, Mary, 7531 Havinnes (BE); GUIOT, Ludivine, 59158 Maulde (FR)
(74) Representative: De Clercq & Partners
(86) International application number: PCT/EP2018/078755
(87) International publication number: WO 2019/077128

(56) References cited:
- EP-A1- 3 216 354
- WO-A1-2012/081734
- Anonymous: "GNPD - Stick Style Seafood", , December 2016 (2016-12), pages 1-2, XP055428908, Retrieved from the Internet: URL:http://www.gnpd.com/sinatra/recordpage /4459957/from_search/fg76xCzeT7/?page=1 [retrieved on 2017-11-27]
- Anonymous: "GNPD - Surimi Sticks", , July 2014 (2014-07), pages 1-2, XP055428977, Retrieved from the Internet: URL:http://www.gnpd.com/sinatra/recordpage /2519765/from_search/lsMPJJljCN/?page=1 [retrieved on 2017-11-27]
- A. HUNT ET AL: "Roles of Starch in Surimi Seafood: A Review", FOOD REVIEWS INTERNATIONAL, vol. 25, no. 4, 29 September 2009 (2009-09-29), pages 299-312, XP055430395, Philadelphia, USA ISSN: 8755-9129, DOI: 10.1080/87559120903155834
- KIM J M ET AL: "Effect of Starch of Textural Properties of Surimi Gel", JOURNAL OF FOOD SCIENCE,, vol. 52, no. 3, May 1987 (1987-05), pages 722-725, XP001346880,

## Description

### Field of the invention

The present invention relates to the use of pea starch and potato starch to replace egg white in texturised seafood analogue products. The invention also relates to a texturised seafood analogue product substantially free of egg white comprising pea starch and potato starch. The invention further relates to a method of preparation of said texturised seafood analogue products.

### Background of the invention

Texturised seafood analogue products or texturised imitation seafood products are a fast-growing segment of the food product industry. More and more texturised seafood analogue products are present in the market. They may be in the form of stick, bowl, sea-shell or grated and may be fried, steamed or boiled for example. The most prevalent examples of texturised seafood analogue products are those derived from surimi.

The term "surimi" or "surimi sticks" may correspond to a fish paste that has been texturised with the presence of different ingredients like starch, egg white, sugar and protein. Fish paste contains generally mostly flesh fish that is frozen directly after fishing. Some fish paste may contain stabilizers like sorbitol, or polyphosphates. The proportion of sea products entering in the various preparations called "surimi" varies widely. This proportion can be close to 100%, as for some quality kamaboko. It may be less than 25%, for certain "crab sticks".

In the majority of texturised seafood analogue products, egg white is present. Egg allergy is a type of food allergy. It is a hypersensitivity to dietary substances from the yolk or whites of eggs, causing an overreaction of the immune system. It is usually treated with an exclusion diet and vigilant avoidance of foods that may be contaminated with egg. The most severe allergy reaction is called anaphylaxis and is an emergency situation requiring immediate attention and treatment with epinephrine. Egg allergy appears mainly in children and is the second most common food allergy in children in the United States. Most children outgrow egg allergy by the age of five, but some people remain allergic for a lifetime. Egg whites, which are potent histamine liberators, also provoke a non-allergic response in some people. In this situation, proteins in egg white directly trigger the release of histamine from mast cells on contact. Because this mechanism is classified as a pharmacological reaction, or "pseudoallergy", the condition is considered as a food intolerance instead of a true IgE-based allergic reaction. Symptoms may include abdominal pain, diarrhoea, or any symptoms of histamine release.

Furthermore, egg white is an expensive product. The crude material, egg, is costly and the process to obtain egg white is quite complex which explains its high price at the end. In view of all the disadvantages at the health, economic, environmental and nutritional level that are associated with the consumption of egg white, there is therefore considerable interest in the identification of a suitable alternative for egg white.

WO 2012/081734 describes a method for producing shrimp or crab flavoured fish-like foodstuff containing low protein by gelatinizing components e.g. konjac powder in hot water, mixing cut gelatinized product with refined konjac powder and water and gelatinizing the molded mixture.

### Summary of the invention

It is the merit of the applicant of having discovered that pea starch and potato starch could surprisingly, advantageously replace egg white in texturised seafood analogue products, while maintaining organoleptic properties, and in particular gustatory, olfactory, visual and tactile properties that are at least equivalent, or even better than those of texturised seafood analogue products made with egg white. Particular advantages of pea starch are that it is not an allergen and is low cost compared to egg white. Pea starch has a low temperature of gelatinisation and syneresis of pea starch after gelation is significant. According to a main aspect of the present invention, the use of pea starch and potato starch to replace egg white in texturised seafood analogue products is provided. The egg white is replaced partly by a combination of pea starch and potato starch.

The present invention is defined by the appended claims.

### Brief description of the drawings

**Figure 1****:** typical curves obtained from the compression-relaxation of two surimi brands using a cylinder probe
**Figure 2****:** graphic representation of the relation of the max force representing the firmness (hardness) of the product, and the ratio Min force / Max force * 100 representing the relaxation (and is an indication of the elasticity of the product).
**Figure 3****:** Texture Analyzer equipped with two grips "A/TG TENSILE GRIPS"
**Figure 4****:** the stretching capacity Is measured as a function of the force applied over time.

### Detailed description

Before the present method of the invention is described, it is to be understood that the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of", as well as the terms "consisting essentially of", "consists essentially" and "consists essentially of".

The recitation of numerical ranges by endpoints includes all numbers and fractions.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In a first aspect, the invention relates to a texturised seafood analogue product substantially free of egg white and comprising pea starch and potato to replace the egg white.

As used herein, the term "texturised seafood analogue product" refers to a product comprising fish that has been processed. Texturised seafood analogue products may be in the form of a stick, bowl, sea-shell, grated and may for example be fried, steamed, boiled. According to the invention, the texturised seafood analogue product comprises at least 30 wt.% of fish paste based on the total weight of the product, preferably at least 45 wt.% of fish paste, more preferably at least 60 wt.% of fish paste based on the total weight of the product. The most prevalent examples of texturised seafood analogue products are those derived from surimi.

In a preferred embodiment, the texturised seafood analogue product may be a "surimi".

As used herein, the term "surimi" or "surimi sticks" may correspond to a fish paste that has been texturised with the presence of different ingredients like starch, egg white, sugar and protein. The proportion of sea product entering in the various preparations called "surimi" varies widely. In the texturised seafood analogue products described herein, the egg white has been replaced by pea starch totally or partly. In case the egg white is partly replaced by pea starch, the other part has been replaced by potato starch. The egg white has thus been replaced by pea starch and potato starch in a certain ratio with respect to each other.

As used herein, the term "fish paste" refers to a product that contains generally mostly fish flesh that is frozen directly after fishing or catching. Some fish paste may contain stabilizers like sorbitol or polyphosphates.

As used herein, the term "pea" refers to the round seeds contained in the pod of Pisum sativum and its subspecies, varieties or cultivars. Preferably, the peas are yellow peas, preferably dry yellow peas, i.e. yellow peas which have been harvested in a dry state. Different varieties of peas may be for examples smooth pea or wrinkled pea. The term "pea" may also refer to chickpea or Vicia faba. The chickpea or chick pea (Cicer arietinum) is a legume of the family Fabaceae, subfamily Faboideae. Its different types are variously known as gram, or Bengal gram, garbanzo or garbanzo bean, or Egyptian pea. Vicia faba, also known as the broad bean, fava bean, faba bean, field bean, bell bean, or tic bean, is a species of flowering plant in the pea and bean family Fabaceae native to North Africa southwest and south Asia, and extensively cultivated elsewhere.

As used herein, the term "starch" refers to a polymeric carbohydrate encompassing a large number of glucose units joined by glycosidic bonds. As used herein, the starch is in the native form. As used herein, the term "native" refers to starch that has not been modified by enzymatic or chemical processing methods. Native starch may however have been modifying by physical methods such as thermal treatment, extrusion and/or processing. According to the invention, starch may be precooked and pregelatinised.

As used herein, the term "pea starch" encompasses starch extracted from peas and in its native form is rich in amylose (up to 35%). According to the invention, pea starch can be isolated using techniques such as pin milling and air classification. Air classification is the most commonly used commercial method for pea starch isolation. The process requires a very high degree of particle size reduction (achieved by pin milling) in order to separate the starch granules from the protein matrix. The major fraction from the air classification process is the low-protein starch fraction, which is separated from the fine protein fraction during the process. The starch concentrate contains about 65% of starch. Residual protein associated with air classified field pea starch granules is derived from protein bodies, agglomerates, chloroplast membrane remnants (which enclose the starch granule) and from a water-soluble fraction which is presumably derived from the dehydrated starch. Re-milling and reclassifying the starch fraction removes most of the protein bodies and agglomerates while water washing results in removal of most of the remainder of the attached protein. The above purification procedure results in a protein content of 0.25% in the washed starch. The purity of starch obtained by wet processing is higher than that obtained by air-classification. Smooth pea starch could be extracted in high yields (93.8-96.7%) from its flour, after protein extraction at pH 9 using different sieving (200-60 pm) and washing conditions. The starches were found to be contaminated mainly by cell wall polysaccharides (less than 4%). The protein content in the starch ranged from 0.3-0.4%. (Starch 54 (2002) 217-234; Pea starch: Composition structure and properties - A review). Nastar^{®} is native pea starch from yellow peas, and commercially available product from Cosucra. Nastar^{®} comprises minimally 88% dry matter, i.e. native pea starch. Pea starch for use in the present invention can be obtained from Cosucra.

The two major components of starch are amylose and amylopectin. Generally, legume starches are characterized by a high amylose content (24-65%). But the amylose content of smooth pea, pea mutants and wrinkled pea starches range from 33.1-49.6%, 8-72% and 60.5-88% respectively. Amylose, the minor component, consists mainly of α (1-4) (amylose) linked D-glucopyranosyl residues. The molecular weight of amylose varies between 105-106 Da. Amylopectin is the major component of field pea starch with a Mw of the order 107-109 Da. Amylopectin is composed of linear chains of (1-4) α-D-glucose residues connected through (1- 6)-α-linkages (5-6%). The granule size of smooth pea starch is variable and ranges from 2-40 µm. Most of the granules are oval, although spherical, round elliptical and irregularly shaped granules are also found. Pea starch has a low temperature of gelatinisation and syneresis of pea starch after gelation is significant.

As used herein, the term "potato starch" encompasses starch extracted from potatoes. According to the invention, production of potato starch may comprise the steps such as below (cf. for example the procedure disclosed by Roy L. Whistler, J. N. BeMiller and Eugene F. Paschall, Starch Chemistry and technology Second edition 1984, p482-484). When processing cull potatoes, the raw material is flumed into the plant. During this process, stones and much of the dirt are removed. A further washing step, employing either a trough with paddles for tumbling the potatoes or a washer, is usually included. After washing, the potatoes are disintegrated. The most commonly used equipment i s a vertical hammermill in a screen enclosure. The macerated potatoes are swirled against the screen and the pulp is forced through the holes. In the first stage of grinding, the outlet screen will have 3/16-1/4-in. (4.8-6.4 mm) holes. Sulphur dioxide is normally added at the time of disintegration to inhibit the action of oxidative enzymes that discolour the starch. It may be added once or twice at other steps in processing. In the next step, the pulp is screened or passed through a rotary sieve to separate free starch from the pulp. When screening, screens of 80 to 120-mesh are used remove much of the coarse fiber followed by 120- to 150-mesh screens to remove finer materials. The rotary sieve consists essentially of an impeller that drives the disintegrated material through a slot screen with typical slot dimensions of 0.014 X 0.157 in. (0.35 x 4.00 mm). For efficient starch recovery, the pulp is reground in a hammermill with screens of 1/16 in. (1.5 mm) or less. With two stages grinding, the starch yield will be at least 12% based on raw potatoes fed to the plant. The starch from the screen or rotary sieves is diluted with fresh water to wash out soluble impurities, then concentrated in a continuous centrifugal separator. There may be two or more separators operating in series with further screening in between to remove traces of fiber. The starch slurry enters the separators at 3°-4° Baume and comes out at about 18° Baume. Attempting higher concentration at this stage results in loss of starch. The final washing is sometimes accomplished by dilution with fresh water and reconcentration in a hydrocyclone. The hydrocyclone is a compact conical chamber with an opening centered in the top for water escapement and an opening at the bottom of the cone for starch slurry. The diluted starch enters at high pressure near the top and at a tangent to the chamber. The swirling action creates centrifugal force which concentrates the starch at the bottom and releases "clean" water at the top. From the separators or hydrocyclones, the starch is fed to a batch centrifuge for further purification. In this operation, any remaining fiber or dirt is concentrated at the surface of the cake formed in the centrifuge. This is scraped off with a knife blade, and the residual clean starch is washed out to a holding tank where sulphur dioxide is usually added again. In some older plants, tabling is used instead of a batch centrifuge. In this process, the starch is allowed to settle in a tank and the impurities are flushed off the surface. The clean starch is then transferred to a holding tank. From the holding tank or last stage of the hydrocyclones, the starch slurry is dewatered over a vacuum filter to about 60-65% solids. The dewatered starch is then fed directly to a flash dryer. The most common drier is direct fired with natural gas or propane and has an induction fan that pulls the starch and hot air stream through a cyclone that separates the dry product. Temperature is controlled so that the outlet temperature is 46-49°C; an equilibrium moisture content of about 17-18% results. Care be taken to avoid excessive inlet temperatures (175°C) which may result in pre-gelled or "pasted" starch agglomerations. Screening over an 80-90 mesh shaker screen removes oversize or agglomerated material before the product is packaged in 50- or 100-lb bags. Industrial-grade potato starch is generally dried to 17-18% moisture. Typical levels of trace components will be 0.35% ash, 0.1% water solubles, traces of nitrogen and sugars, and nil fat. The product is pure white with a reflectance of a least 90 (relative to magnesium oxide = 100) at 450 mm. Total acidity, expressed as mL of 0.1 M sodium hydroxide required for neutralization of 100g of dried starch is of the order of 10 units.

The term "Egg white" also called albumen or glair is the name for the clear liquid contained within an egg. Egg white consists primarily of about 90% water into which is dissolved about 10% proteins. Egg white may be from eggs from for example chicken, duck or quail. Egg White Powder is commercially available (Blanc d'oeuf poudre, Sélection High Gel BP0301), for instance from IGRECA.

As used herein, the term "free of egg white" or "substantially free of egg white" is defined as less than 1% egg white that is present in the texturised seafood analogue product. No egg white is voluntarily added in the "egg white free" texturised seafood analogue product. Contamination by egg white may occur in the ingredients before mixing in order to obtain the texturised seafood analogue product. Preferably, the egg white is present in less than 0.9 wt %, 0.8 wt %, 0.7 wt %, 0.6 wt %, most preferably less than 0.5 wt. % based on the total weight of the texturised seafood analogue product.

According to the invention, egg white is replaced partly or wholly by pea starch in the texturised seafood analogue product defined herein.

In a preferred embodiment, the replacement rate of egg white by pea starch in said texturised seafood analogue product is comprising between 25% and 100%, at least 25%, at least 30%, at least 35%, at least 40%, at least 45%; at least 50%, at most 100%, at most 95%, at most 90%, at most 85%, at most 80%, at most 75%, at most 70%, at most 65%, at most 60%, at most 55%, preferably between 50% and 100%.

In a preferred embodiment, egg white is wholly replaced by pea starch in said texturised seafood analogue product. In a preferred embodiment, the rate of replacement is 100%. In a preferred embodiment, pea starch is used to replace egg white in the texturised seafood analogue product, wherein said product already comprises potato starch. According to an embodiment, in a texturised seafood analogue product already containing potato starch, the egg white is replaced with pea starch and any additional potato starch as required in the present invention.

The texturised seafood analogue product comprises pea starch and potato starch, with a ratio pea starch/potato starch comprised between 2/1 to 1/6, preferably between 1/1 to 1/4, preferably with the ratio of pea starch/potato starch in a range between 2/1 and 1/6, or between 1/1 and 1/4.

In a preferred embodiment, the product is a surimi. In another preferred embodiment, a combination of pea starch and potato starch with a ratio of between 2/1 and 1/6, preferably between 1/1 and 1/4 is used to replace the egg white in the seafood analogue product wherein said product is a surimi.

In a preferred embodiment, pea starch is present with a quantity between 0.5 and 10 wt.%, preferably from 0.5 to 8 wt.%, more preferably from 2.5% to 5 wt.% based on the total weight of the product, such as for instance at least 0.5 wt.%, for example at least 0.6 wt.%, for example at least 0.7 wt.%, for example at least 0.8 wt.%, for example at least 0.9 wt.%, for example at least 1.0 wt.%, for example at least 1.1 wt.%, for example at least 1.2 wt.%, for example at least 1.3 wt.%, for example at least 1.4 wt.%, for example at least 1.5 wt.%, for example at least 1.6 wt.%, for example at least 1.7 wt.%, for example at least 1.8 wt.%, for example at least 1.9 wt.%, for example at least 2.0 wt.%, for example at least 2.1 wt.%, for example at least 2.2 wt.%, for example at least 2.3 wt., for example at least 2.4 wt.%, for example at least 2.5 wt.%, for example at least 2.6 wt.%, for example at least 2.7 wt.%, for example at least 2.8 wt.%, for example at least 2.9 wt.%, for example at most 10 wt.%, for example at most 9 wt.%, for example at most 8 wt.%, for example at most 7 wt.%, for example at most 6 wt.%, for example at most 5 wt.%, for example at most 4.5 wt.%, for example at most 4 wt.%, for example at most 3,5 wt.%, for examples at most 3 wt.%, based on the total weight of the product. In a further embodiment, the substantially egg white free texturised seafood analogue product comprises from 0.5 to 10 wt.% pea starch based on the total weight of the product, preferably from 0.5 to 8 wt.%, more preferably from 0.5 to 5 wt.% based on the total weight of the product. According to another embodiment, the substantially egg white free texturised seafood analogue product comprises from 2.5 to 10 wt.% of pea starch based on the total weight of the product, preferably from 2.5 to 8 wt.%, more preferably from 2.5 to 5 wt.% based on the total weight of the product.

In a preferred embodiment, potato starch is present with a quantity between 0.5 and 10 wt.%, preferably from 0.5 to 8 wt.%, more preferably from 2.5% to 5 wt.% based on the total weight of the product, such as for instance at least 0.5 wt.%, for example at least 0.6 wt.%, for example at least 0.7 wt.%, for example at least 0.8 wt.%, for example at least 0.9 wt.%, for example at least 1.0 wt.%, for example at least 1.1 wt.%, for example at least 1.2 wt.%, for example at least 1.3 wt.%, for example at least 1.4 wt.%, for example at least 1.5 wt.%, for example at least 1.6 wt.%, for example at least 1.7 wt.%, for example at least 1.8 wt.%, for example at least 1.9 wt.%, for example at least 2.0 wt.%, for example at least 2.1 wt.%, for example at least 2.2 wt.%, for example at least 2.3 wt., for example at least 2.4 wt.%, for example at least 2.5 wt.%, for example at least 2.6 wt.%, for example at least 2.7 wt.%, for example at least 2.8 wt.%, for example at least 2.9 wt.%, for example at most 10 wt.%, for example at most 9 wt.%, for example at most 8 wt.%, for example at most 7 wt.%, for example at most 6 wt.%, for example at most 5 wt.%, for example at most 4.5 wt.%, for example at most 4 wt.%, for example at most 3,5 wt.%, for examples at most 3 wt.%, based on the total weight of the product.

According to the invention, texturised seafood analogue products substantially free of egg white comprising pea starch and potato starch are described, wherein said products comprise pea starch and potato starch, with a ratio of pea starch/potato starch comprised between 2/1 to 1/6, preferably between 1/1 to 1/4.

According to the invention, the texturised seafood analogue product is substantially free of egg product, meaning that the texturised seafood analogue product contains less than 1 wt% of egg white based on the total weight of the product. In a preferred embodiment, the texturised seafood analogue is egg-free.

The term "substantially free of" as used herein with respect to egg white, egg product or other allergens intends to indicate that no such egg product, egg white or other allergen has been actively or intendedly added to the texturised seafood analogue product. Trace amounts of allergens are almost impossible to avoid and hence the term intends to indicate that less than 1% by weight of such egg product, egg white, or other allergen is present in the final texturised seafood analogue product defined herein. More preferably at most 0.9, 0.8, 0.7, 0.6, 0.5 % by weight or less of such egg product, egg white or other allergen is present in the final texturised seafood analogue product as defined herein.

In a preferred embodiment, the texturised seafood analogue product contains substantially no other allergens such as meat- or soy-derived products.

As used herein the term "contains substantially no allergens" is understood as above, the texturised seafood analogue products contain less than 1 % by weight of such products, such as they comprise less than 1%, preferably less than 0.9 %, 0.8 %, 0.7 %, 0.6 % or less than 0.5% by weight of meat- or soy-derived products.

The texturised seafood analogue product comprises pea starch and potato starch with a ratio pea starch/potato starch comprised between 2/1 to 1/6, preferably between 1/1 to 1/4. As used herein, a ratio of 1/1 pea starch / potato starch means equal amounts of both starches, i.e. about 50% by weight of each starch. A ratio of 1/4 corresponds to a concentration of about 20% by weight of pea starch vs. about 80% by weight of potato starch. A ratio of 2/1 corresponds to a concentration of about 66% by weight of pea starch vs. about 33% by weight of potato starch. A ratio of 1/6 corresponds to a concentration of about 14% by weight of pea starch vs. about 86% by weight of potato starch.

In a preferred embodiment, the texturised seafood analogue product has a hardness of at least 700g, of at least 710g, of at least 720g, of at least 730g, of at least 740g, of at least 750g, of at least 760g, of at least 770g, of at least 780g, of at least 790g, of at least 800g, of at least 810g, of at least 820g, of at least 830g, of at least 840g, of at least 850g, of at least 860g, of at least 870g, of at least 880g, of at least 890g, of at least 900g, of at least 910g, of at least 920g, of at least 930g, of at least 940g, of at least 950g, of at least 960g, of at least 970g, of at least 980g, of at least 990g, of at least 1000g, of at least 1010g, of at least 1020g, of at least 1030g, of at least 1040g, of at most 1500g, of at most 1400g, of at most 1300, of at most 1200g, of at most 1190g, of at most 1180g, of at most 1170g, of at most 1160g, of at most 1150g, of at most 1140g, of at most 1130g, of at most 1120g, of at most 1120g, of at most 1110g, of at most 1100g, of at most 1090g. In embodiments, the texturised seafood analogue product has a hardness of at least 700 g and at most 1500 g.

While the texturised seafood analogue products described herein have a reduced allergenicity due to the replacement of egg white, it is important that the texture of the product remains similar than conventional surimi based products. The products described herein, which comprise pea starch and potato starch at a ratio of pea starch/potato starch comprised between 2/1 to 1/6, preferably between 1/1 to 1/4, and which are substantially free of egg white, ie comprising less than 1 wt % of egg white, preferably comprising less than 0.5 wt.% of egg white, have a hardness and elasticity after cooking, and even for 15 days after cooking which is comparable with conventional surimi products.

In a preferred embodiment, the texturised seafood analogue products described have an elasticity, which is between 75 and 85%, preferably higher than 75%, most preferably higher than 77%, wherein the elasticity is measured after preparation of the product, according to the formula: (Min force/Max force) * 100 and presented in %. In another preferred embodiment, the elasticity of the texturised seafood analogue is between 75 and 85%, more preferably between 76 and 82%, more preferably between 77 and 81%, preferably higher than 75%, most preferably higher than 77%, and wherein the elasticity is measured after cooking the product in cans and using a conical probe P45-C in a TA.XT2i Texture Analyzer (see Brochure Stable Micro Systems www.stablemicrosystems.com). The elasticity is presented in % according to the formula: (Min force/Max force) * 100, and as further explained in the examples.

In a preferred embodiment, the texturised seafood analogue product is a surimi.

In a preferred embodiment, the texturised seafood analogue product may be sterilized or pasteurised.

In a further aspect of the invention, the invention relates to a method of preparation of said texturised seafood analogue product.

The Surimi base is chopped and then part of the frizzed water with salt, sugar and oil is added and the mixture is mixed again. Egg albumen powder and/or pea and potato starch are added and the rest of frizzed water is added. Next the blend is chopped until complete binding. A preparation of texturised seafood analogue product is obtained. The final temperature can't exceed 10°C. The preparation of texturised seafood analogue product is cooked in steamer. Time and temperature are two important parameters that influence the gelling properties of starch and the gelling properties of fish protein.

The surimi dough is spread at very fine height and the dough is rolled out.

In an embodiment, the method for preparing texturised seafood analogue products comprises a step wherein the surimi base is chopped, the chopping is done with a bowl chopper preferably.

In a preferred embodiment, in the method for preparing texturised seafood analogue products, the cooking time time is comprised between 10 and 30 minutes.

In a preferred embodiment, the preparation of texturised seafood analogue product is cooked in a steamer.

From this texturised seafood analogue product, consumer end products can be made such as, but not limited to: fish cakes, fish sausages, imitation sea food, cured surimi, fish paste, etc. by shaping, addition of flavour and/or colour, known in the art.

### EXAMPLES

### Protocols

### Colour measurement

The apparatus used is Chromameter CR-5 from Konica Minolta. The type of measure is "Reflexion measure". The 8 mm of gap diameter is chosen. Calibration measurements with white and black bottles are made. A slice of the texturised seafood analogue product of 15 by 15 mm is put on a slide and then the apparatus measures the parameters L*a*b*.

### Hardness measurement

The surimi base mix is put in bowl chopper, at intermediate speed, for 2 minutes. Then part of the water, salt, sugar and oil are mixed at intermediate speed for 2 minutes. Egg white powder and/or pea or potato starch and water are added to the mixture and mixed in total for 12 minutes at intermediate speed. The final temperature can't exceed 10°C. 125g of the mixture is added to a can (can of 150ml of capacity, in aluminium; 73 mm of diameter and a height of 44 mm). the can is closed and cooked for 1h15 at 95°C (85°C core temperature). The mixture is stored at 4°C. The measurement is done on the product directly in the can

The apparatus used is TA.XT2i Texture analyser from Stable Micro System. The setting parameters are:
- Mode: Measure Force in Compression
- Option: Hold Until Time
- Speeds: Pre-Test: 2,0 mm/s, Test: 1,0 mm/s and Post-Test: 5,0 mm/s.
- Distance: 20,0mm
- Time: 30,00s
- Trigger: Type: Auto, Value: 1,0g
- Stop Plot at: Trigger Return
- Auto Tare: On
- Load cell, 5: On
- Probe: P45C 45° cone Perspex from Stable Micro System
- Calculation: Max force and Min force

Hardness corresponds to the formula: Hardness = Max force and is expressed in "g".

### Example 1: Production of surimi sticks with white egg (Control)

**Table 1**

| **Ingredients** | **Quantity** |
|---|---|
| Surimi base (91.7% of flesh fish, 4.4% sorbitol, 0.3% polyphosphates, 3.6% sugar) | 39,00 |
| Rapeseed oil | 2,30 |
| Salt | 1,60 |
| Sugar | 2,80 |
| Potato starch (82% native potato starch, 16% water, 1% protein, 1% lipid) | 7,00 |
| Egg white powder (82% protein egg white, 4% carbohydrate, 5% ash, water) | 3,60 |
| Water | 43,70 |
| Total | 100,00 |

The Surimi base is chopped in bowl chopper at intermediate speed for 2 minutes. Then part of the frozen water with salt, sugar and oil is added and the mixture is mixed again at intermediate speed for 2 minutes. Egg albumen powder and potato starch are added and the rest of frozen water is added. Next the blend is chopped until complete binding (12 minutes in total) at intermediate speed. The final temperature can't exceed 10°C.

For fabrication of surimi sticks (50 g of surimi dough is put in vacuum)

The surimi dough is spread (in a plastic bag under vacuum) and pre-baked in a steamer for 10 minutes. The product is cooled and rolled up, -packed again under vacuum and sterilized in a steamer for 20 minutes and stored at 4°C.

### Comparison with total replacement of egg white by pea starch

The process is the same as above except that all of egg white is replaced by pea starch.

**Table 2**

| **Ingredients** | **Quantity** |
|---|---|
| Surimi base (91.7% of flesh fish, 4.4% sorbitol, 0.3% polyphosphates, 3.6% sugar) | 39,00 |
| Rapeseed oil | 2,30 |
| Salt | 1,60 |
| Sugar | 2,80 |
| Potato starch (82% native potato starch, 16% water, 1% protein, 1% lipid) | 7,00 |
| Water | 43,70 |
| Pea starch (≥ 88% native pea starch, water)* | 3,60 |
| Total | 100,00 |

| | |
|---|---|
| *Nastar^{®} | |

The control surimi sticks with egg white were compared with surimi sticks made with pea starch in total replacement of egg white. Different parameters were analysed such as the colour L*a*b*, the hardness and a sensory analysis was done.

**Table 3**

| **Colour** | **Control** | **Pea starch** |
|---|---|---|
| **L*** | 75,7 | 75,1 |
| **a*** | -2,7 | -2,4 |
| **b*** | 7,2 | 4,9 |
| **Hardness (g)** | 1085 | 1047 |

In term of colour, L* and a*remain the same with pea starch, b* was reduced with pea starch (bluer, less yellow).

Egg white replacement with pea starch (at the same concentration) gives similar hardness than the control.

### Sensory analysis

The two samples of surimi sticks, the control with egg white and the one with pea starch in total replacement of egg white were blind tested by a panel of experts in a sensory analysis of 8 persons.

The test was called "simple description test" (Norm AFNORV09-001 1983). This test is an attempt to obtain a qualitative description of all the particular properties contributing to the overall characterization of a sample.

The test may be applied to:
(a) identify and describe the properties of one or more specific samples,
(b) establish the order in which the properties are perceived.

The sample is evaluated separately by each subject, and the responses recorded. A listing of all properties has been provided: firmness, elasticity, colour and texture. The sensory evaluation has been followed by a discussion directed by the jury.

The results have been collated in order to obtain a list of descriptive terms applicable to the sample, based on the frequency of use of each descriptive term.

**Table 4**

| **Sensory analysis** | **Control** | **Egg white replacement with pea starch** |
|---|---|---|
| Firm (5: firm and 0: not firm) | 5 | 4 |
| Elasticity (5: good elasticity, 0: no elasticity) | 5 | 4 |
| Colour (5: white, 0: not white) | 5 | 5 |
| Texture (5: normal texture; 0: very different from normal) | 3 (gummy) | 4 (close to industrial surimi) |

In table 4, the results of the sensory analysis have shown similar properties between the control and the surimi made without egg white.

### Example 2: Variation of the amount of pea starch

All tests do not contain egg white. Different quantities of pea starch were used. Test 1 is a total replacement of egg white by pea starch (same quantity of pea starch compared to control test). For test 2, the quantity of pea starch is divided by two as compared to test 1. In order to keep the same final weight of the final product, more water was added. In test 3, the quantity is divided by two as compared to test 2. Test 4 was made without pea starch and egg white (only potato starch).

**Table 5**

| **Ingredients** | **Test 1** | **Test 2** | **Test 3** | **Test 4** |
|---|---|---|---|---|
| Surimi base (91.7% of flesh fish, 4.4% sorbitol, 0.3% polyphosphates, 3.6% sugar) | 39,00 | 39,00 | 39,00 | 39,00 |
| Rapeseed oil | 2,30 | 2,30 | 2,30 | 2,30 |
| Salt | 1,60 | 1,60 | 1,60 | 1,60 |
| Sugar | 2,80 | 2,80 | 2,80 | 2,80 |
| Potato starch (82% native potato starch, 16% water, 1% protein, 1% lipid) | 7,00 | 7,00 | 7,00 | 10,60 |
| Water | 43,70 | 45,50 | 46,40 | 43,70 |
| Pea starch (≥ 88% native pea starch, water) | 3,60 | 1,80 | 0,90 | / |
| Pea/potato starch ratio | 1/1.9 | 1/3.9 | 1/7.8 | / |
| Total | 100,00 | 100,00 | 100,00 | 100,00 |

The results are presented in tables 6 and 7.

**Table 6**

| **Colour:** | **Test 1** | **Test 2** | **Test 3** | **Test 4** |
|---|---|---|---|---|
| **L*** | 75,1 | 76,5 | 75,1 | 78,4 |
| **a*** | -2,4 | -2,4 | -2,4 | -2,7 5 |
| **b*** | 4,9 | 4,9 | 4,8 | 7,5 |
| **Hardness (g)** | 1047 | 799 | 827 | 782 |

**Table 7**

| **Sensory analysis** | **Test 1** | **Test 2** | **Test 3** | **Test 4** |
|---|---|---|---|---|
| Firm (5: firm and 0: not firm) | 4 | 4 | 1 | 2 |
| Elasticity (5: good elasticity, 0: no elasticity) | 4 | 4 | 2 | 2 |
| Colour (5: white, 0: not white) | 5 | 5 | 5 | 5 |
| Texture (5: normal texture; 0: different from normal) | 4 | 4 (more pasty) | 2 | 3 |

The results of test 1 and test 2 are similar and close to the control. The results of tests 3 and 4 have shown properties very different from the control.

Reduction of the pea starch dosage does not improve the elasticity and surimi sticks are becoming less firm, more pasty. Potato starch cannot be used for egg white replacement as it gives completely different texture (Test 4).

### Example 3: Comparison with other starches

Same protocol is used as for example 1. The quantities are depicted in the following table.

**Table 8**

| **Ingredients** | **Control** | **Pea starch** | **Potato starch** | **Rice starch** | **Maize starch** | **Waxy maize starch** | **Wheat starch** | **Tapioca starch** |
|---|---|---|---|---|---|---|---|---|
| Water | 43,70 | 43,70 | 43,70 | 43,70 | 43,70 | 43,70 | 43,70 | 43,70 |
| Surimi base (91.7% of flesh fish, 4.4% sorbitol, 0.3% polyphosphates, 3.6% sugar) | 39,00 | 39,00 | 39,00 | 39,00 | 39,00 | 39,00 | 39,00 | 39,00 |
| Rapeseed oil | 2,30 | 2,30 | 2,30 | 2,30 | 2,30 | 2,30 | 2,30 | 2,30 |
| Salt | 1,60 | 1,60 | 1,60 | 1,60 | 1,60 | 1,60 | 1,60 | 1,60 |
| Sugar | 2,80 | 2,80 | 2,80 | 2,80 | 2,80 | 2,80 | 2,80 | 2,80 |
| Potato starch (82% native potato starch, 16% water, 1% protein, 1% lipid) | 7,00 | 7,00 | 10,60 | 7,00 | 7,00 | 7,00 | 7,00 | 7,00 |
| Egg white powder (82% protein egg white, 4% carbohydrate, 5% ash, water) | 3,60 | | | | | | | |
| Pea starch (≥ 88% native pea starch, water)* | | 3,60 | | | | | | |
| Rice starch (88% native starch, 1% fat, water) | | | | 3,60 | | | | |
| Maize starch (88% native starch, water) | | | | | 3,60 | | | |
| Native waxy maize starch (87% waxy starch water) | | | | | | 3,60 | | |
| Native wheat starch (88% native starch, water) | | | | | | | 3,60 | |
| Tapioca starch (≥ 88% native starch, water) | | | | | | | | 3,60 |
| Total | 100,00 | 100,00 | 100,00 | 100,00 | 100,00 | 100,00 | 100,00 | 100,00 |

| | | | | | | | | |
|---|---|---|---|---|---|---|---|---|
| * Nastar | | | | | | | | |

**Table 9**

| **Sensory analysis** | **Control** | **Pea starch** | **Potato starch** | **Rice starch** | **Maize starch** | **Waxy maize starch** | **Wheat starch** | **Tapioca starch** |
|---|---|---|---|---|---|---|---|---|
| Firm (5: firm and 0: not firm) | 4 | 5 | 3 | 3 | 3 | 1 | 2 | 5 |
| Elasticity (5: good elasticity, 0: no elasticity) | 4 | 5 | 3 | 2 | 3 | 2 | 3 | 2 |
| Colour (5: white, 0: not white) | 4 | 5 | 3 | 5 | 4 | 4 | 4 | 3 |

The results of the test with pea starch has shown the closest properties compared to the control with egg white. Other starches than pea starch are less firm, except tapioca starch, but this last one does not give a homogenous texture.

### Example 4: Replacement of egg white with a combination of pea starch and potato

### starch - comparative experiments

The process for making the surimi dough and the surimi sticks is the same as described in Example 1. The Control has the same composition as in the previous examples
- T1: Nastar¹ 3,6% + 7% Potato starch²
- T2: Nastar¹ 7,1% + 3,5% Potato starch²
- T3: Nastar¹ 10,6%
- T4: 3,6% Nastar¹ + 7% Egg albumen³
- T5: 7% Nastar¹ + 3,6% Egg albumen³

1Nastar^{®} is ≥ 88% native pea starch and water (Commercial product from Cosucra)
2Potato starch is 82% native potato starch, 16% water, 1% protein and 1% lipid
3Egg albumen is Egg white powder comprising 82% protein egg white, 4% carbohydrate, 5% ash and water (Commercial product from IGRECA).

The above components are the same as in the previous example.

**Table 10**

| | **Control** | **T1** | **T2** | **T3** | **T4** | **T5** |
|---|---|---|---|---|---|---|
| Surimi base | 39,00 | 39,00 | 39,00 | 39,00 | 39,00 | 39,00 |
| Rapeseed oil | 2,30 | 2,30 | 2,30 | 2,30 | 2,30 | 2,30 |
| Salt | 1,60 | 1,60 | 1,60 | 1,60 | 1,60 | 1,60 |
| Crystal sugar | 2,80 | 2,80 | 2,80 | 2,80 | 2,80 | 2,80 |
| Potato starch | 7,00 | 7,00 | 3,50 | | | |
| Egg albumen powder HG | 3,60 | | | | 7,00 | 3,60 |
| Water | 43,70 | 43,70 | 43,70 | 43,70 | 43,70 | 43,70 |
| Pea starch* | | 3,60 | 7,10 | 10,60 | 3,60 | 7,00 |
| | 100,00 | 100,00 | 100,00 | 100,00 | 100,00 | 100,00 |

| | | | | | | |
|---|---|---|---|---|---|---|
| *Nastar | | | | | | |

### Analysis of control parameters

**Table 11**

| | **Control** | **T1** | **T2** | **T3** | **T4** | **T5** |
|---|---|---|---|---|---|---|
| **pH surimi** | 6,87 | 6,89 | 6,93 | 6,98 | 6,98 | 6,99 |
| **Color** | | | | | | |
| **L*** | 75,89 | 74,46 | 75,12 | 79,78 | 81,58 | 78,96 |
| **a*** | -2,72 | -2,51 | -2,55 | -2,21 | -2,68 | -2,53 |
| **b*** | 6,08 | 3,43 | 3,08 | 4,48 | 9,4 | 6,78 |

### Texture analysis of Surimi products

### Texture of surimi in cans after cooking

The Observations have been performed similarly as described in the Protocols above.

**Table 12**

| | **Control** | **T1** | **T2** | **T3** | **T4** | **T5** |
|---|---|---|---|---|---|---|
| **Mouth feeling** | Firm and breaking texture | Smoother texture, nice elasticity | more pasty, slightly less elastic | Grainy texture, more fibrous, less smooth | Breaking texture, not elastic, not firm | Breaking texture, soft |

### Elasticity

Shellfish has a characteristically chewy texture; to create a convincing comminuted product, manufacturers need to imitate this.

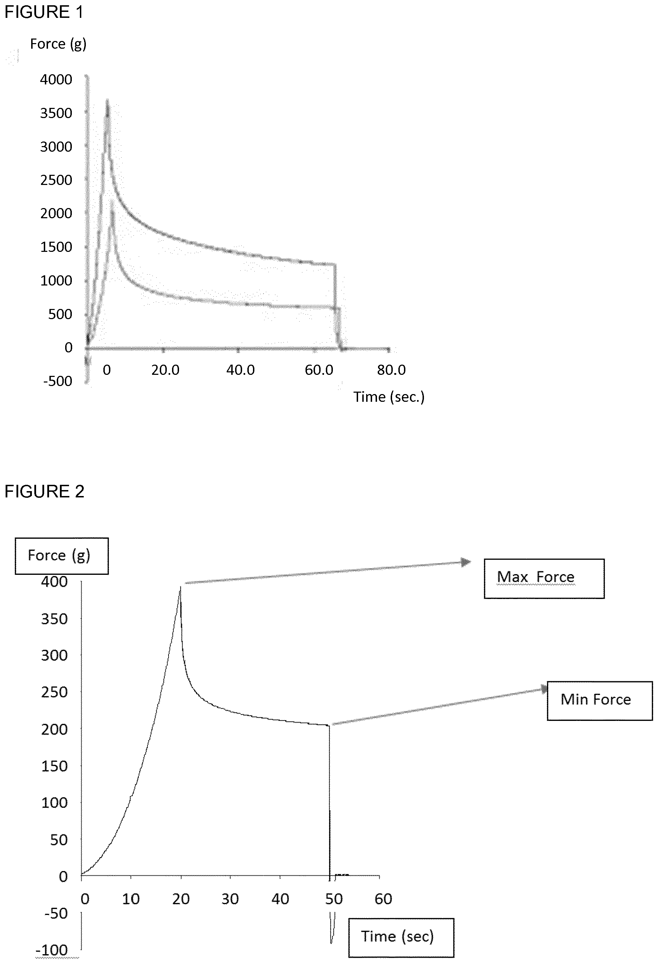

In texture analysis terms, chewiness is measured by elasticity. High elasticity produces an item with a rubbery consistency whereas low elasticity creates an undesirably brittle product. This is illustrated in Figure 1 wherein the typical curves obtained from the compression-relaxation of two surimi brands using a cylinder probe are shown (Relaxation = Min Force / Max Force * 100 and is expressed in %).

The percentage of relaxation represents the index of elasticity, and provides information important in the development of new surimi products. In the tests performed for the figure above, samples were placed under a cylinder probe for a compress-relaxation test.

The test examines the recovery of the surimi samples after compression for a certain length of time.

**In the present example,** the procedure was slightly adapted to the equipment:

The surimi paste was cooked in cans and a conical probe P45-C was used instead of the cylinder probe (to increase the surface of contact): similar curves were achieved.

Equipment used: TA.XT2i Texture Analyzer following the instructions of the manufacturer as depicted in the Brochure of Stable Micro Systems www.stablemicrosystems.com).

The following settings were used:

| Option | | | Hold Until Time |
|---|---|---|---|
| Speeds: | | | |
| | - Pre-test: | | 2,0 mm/s |
| | - Test: | | 1,0 mm/s |
| | - Post-Test: | | 5,0 mm/s |
| Rupture Distance | | | N/A |
| Distance: | | | 20,0mm |
| Force: | | | N/A |
| Time: | | | 30,00s |
| Count: | | | N/A |
| Temperature: | | | 0°C |
| Setting | | | |
| Trigger - Type: | | | Auto |
| | | - Value: | 1,0g |
| Delay Acquisition: | | | N/A |
| Stop Plot at: | | | Trigger Return |
| Break - Detect | | | Off |
| | | - Mode | N/A |
| | | - Sensitivity | N/A |
| Auto Tare: | | | On |
| Batch | | | 81210 |
| Loaded cell | | | 5 On |
| Probe | | | P45C 45° cone perspex |

As depicted in Figure 2, the max force achieved is considered as the firmness (hardness) of the product, whereas the ratio Min force / Max force * 100 is considered as the relaxation (and is an indication of the elasticity of the product)

### Results:

*Elasticity measured after cooking:*

**Table 13**

| | Control | T1 | T2 | T3 | T4 | T5 |
|---|---|---|---|---|---|---|
| Elasticity | 79,7 | 77,6 | 81,8 | 81,7 | 72,7 | 74,8 |
| STDEV | 3,5 | 4,7 | 4,5 | 5,4 | 2,0 | 3,1 |

### Elasticity measured after 15 days

**Table 14**

| | ref | T1 | T2 | T3 | T4 | T5 |
|---|---|---|---|---|---|---|
| Elasticity after 15 days | 64,2 | 61,8 | 60,3 | 58,9 | 56,5 | 56,3 |
| STDEV | 1,7 | 1,1 | 1,8 | 1,6 | 0,8 | 1,2 |

As a conclusion, when comparing with the test products containing egg white (T4 and T5), the test products T1 and T2 containing a combination of pea starch and potato starch, and T3, containing pea starch only, T1 and T2 show excellent properties on texture and elasticity which are comparable with the control surimi stick.

### Stretching of slices

When measuring of the extensibility of the slices, it is important to note that the higher the elasticity of the surimi, the greater the extensibility. The tensile grips are shown in the picture below: the slices of surimi are attached to these grips, then the upper grip will climb up slowly, whereas the lower grip will remain at the same place : as a consequence, the surimi slice is stretched. Analyzes is done by notifying whether either the slice could be stretched without tearing up or if the slice breaks during this experiment. Parameters used for this analysis are described hereunder.

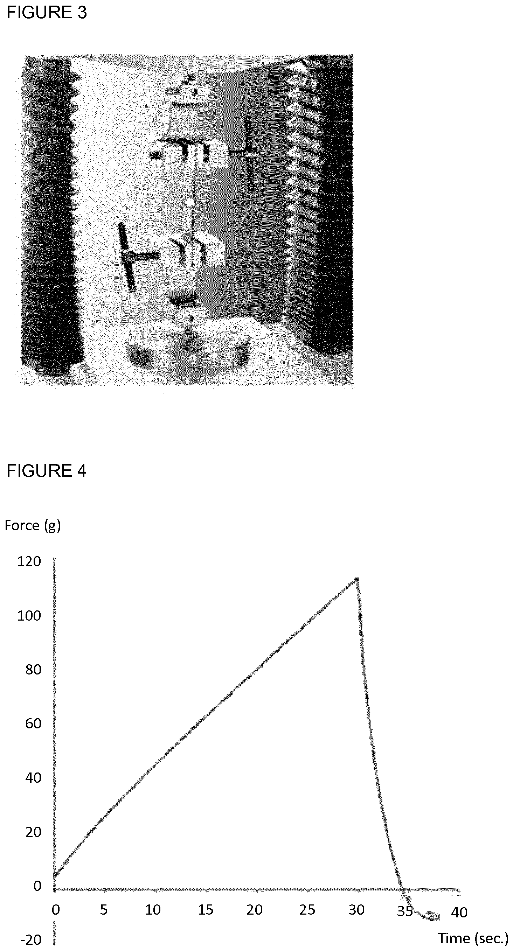

### Equipment used: Texture Analyzer equipped with two grips "A/TG TENSILE GRIPS" (cf. Figure 3).

For this experiment: The surimi was removed from the can and sliced with at slicer n ° 2 (about 2mm) into slices and measured with the Texture Analyzer equipped with two grips "A/TG TENSILE GRIPS". Each slice of surimi was attached with the grips and stretched under the following conditions:
- Force in tension: N/A
- Pre-test speed: 2.0 mm/s
- Test speed: 0.5 mm/s
- Post-test speed: 2.0 mm/s
- Distance: 15.0 mm

10 slices were measured for each trial. As seen in Figure 4, the stretching capacity Is measured as a function of the force applied over time. At the breaking point, where the slice is ruptured due to the increased force, the latter drops instantaneously. The time point of breaking is determinant for the stretching capacity of the slice.

### Results:

**Table 15**

| | Control | T1 | T2 | T3 | T4 | T5 |
|---|---|---|---|---|---|---|
| observations during the stretching | ok | ok | ok | Partial breaking before the end of the measurement | Breaks before the end of the measurement | Breaks before the end of the measurement |

From the table it is clear that the samples according to the present invention (T1 and T2) have an improved stretching capacity as compared to the reference samples.

## Claims

1. A texturised seafood analogue product substantially free of egg white comprising from 0.5 to 10 wt. % of pea starch and from 0.5 to 10 wt. % of potato starch, based on the total weight of the product, wherein the ratio pea starch/potato starch is comprised between 2/1 to 1/6 and wherein the egg white is present in less than 1 wt.% based on the total weight of the product.

2. The texturised seafood analogue product according to claim 1, wherein the egg white is present in less than 0.9 wt.%, 0.8 wt.%, 0.7 wt.%, 0.6 wt.%, most preferably less than 0.5 wt. % based on the total weight of the product.

3. The texturised seafood analogue product according to claim 1 or claim 2 wherein said texturised seafood analogue product comprises from 2.5 to 10 wt.% of pea starch based on the total weight of the product, preferably from 0.5 to 8 wt.% or from 2.5 to 8 wt.%, more preferably from 2.5 to 5 wt.%, based on the total weight of the product.

4. The texturised seafood analogue product according to any of claims 1 to 3 wherein said texturised seafood analogue product comprises from 2.5 to 10 wt.% of potato starch based on the total weight of the product, preferably from 0.5 to 8 wt.% or from 2.5 to 8 wt.%, more preferably from 2.5 to 5 wt.%, based on the total weight of the product.

5. The product according to any one of claims 1 to 4, wherein the ratio pea starch/potato starch is comprised between 1/1 to 1/4.

6. The product according to any one of claims 1 to 5, wherein the texturised seafood analogue product meat- or soy-based products are present in an amount of less than 1 wt %, based on the total weight of the product.

7. The product according to any one of claims 1 to 6, wherein said texturised seafood analogue product comprises at least 30 wt.% of fish paste based on the total weight of the product, preferably at least 45 wt.% of fish paste, more preferably at least 60 wt.% of fish paste based on the total weight of the product.

8. The product according to any one of claims 1 to 7, wherein the texturised seafood analogue product is a surimi.

9. The product according to any one of claims 1 to 8, wherein said texturised seafood analogue product is sterilized or pasteurised.

10. Method for preparing a texturised seafood analogue product according to any one of claims 1 to 9, wherein said method comprises the steps of preparing the base-mixture comprising water, fish paste, pea starch, potato starch, and additives such as oil, salt and sugar; and subsequently cooking said mixture, thereby obtaining a seafood analogue product.

11. The method for preparing a texturised seafood analogue product according to claim 10, wherein said texturised seafood analogue product is cooked for a time comprised between 10 to 30 minutes, more preferably between 15 to 25 minutes.

12. The method for preparing a texturised seafood analogue product according to claim 10 or 11, wherein said texturised seafood analogue product is cooked in steamer.

13. Use of a combination of pea starch and potato starch to replace egg white in a texturised seafood analogue product wherein the ratio of pea starch to potato starch is comprised between 2/1 to 1/6, preferably between 1/1 to 1/4.

14. The use according to claim 13, wherein said texturised seafood analogue product comprise at least 30 wt.% of fish paste, preferably at least 45 wt.% of fish paste, more preferably at least 60 wt.% of fish paste based on the total weight of the product.

15. The use according to claim 13 or 14 wherein said texturised seafood analogue product is a surimi.

## Patentansprüche

1. Texturiertes Meeresfrüchte-Analogprodukt, das im Wesentlichen frei von Eiklar ist, wobei es 0,5 bis 10 Gew.-% an Erbsenstärke und 0,5 bis 10 Gew.-% an Kartoffelstärke umfasst, bezogen auf das Gesamtgewicht des Produkts, wobei das Verhältnis von Erbsenstärke / Kartoffelstärke im Bereich von 2/1 bis 1/6 liegt und wobei das Eiklar zu weniger als 1 Gew.-% vorliegt, bezogen auf das Gesamtgewicht des Produkts.

2. Texturiertes Meeresfrüchte-Analogprodukt gemäß Anspruch 1, wobei das Eiklar zu weniger als 0,9 Gew.-%, 0,8 Gew.-%, 0,7 Gew.-%, 0,6 Gew.-%, mit dem größten Vorzug weniger als 0,5 Gew.-% vorliegt, bezogen auf das Gesamtgewicht des Produkts.

3. Texturiertes Meeresfrüchte-Analogprodukt gemäß Anspruch 1 oder Anspruch 2, wobei das texturierte Meeresfrüchte-Analogprodukt 2,5 bis 10 Gew.-% an Erbsenstärke, bezogen auf das Gesamtgewicht des Produkts, vorzugsweise 0,5 bis 8 Gew.-% oder 2,5 bis 8 Gew.-%, insbesondere 2,5 bis 5 Gew.-%, bezogen auf das Gesamtgewicht des Produkts, umfasst.

4. Texturiertes Meeresfrüchte-Analogprodukt gemäß einem beliebigen der Ansprüche 1 bis 3, wobei das texturierte Meeresfrüchte-Analogprodukt 2,5 bis 10 Gew.-% an Kartoffelstärke, bezogen auf das Gesamtgewicht des Produkts, vorzugsweise 0,5 bis 8 Gew.-% oder 2,5 bis 8 Gew.-%, insbesondere 2,5 bis 5 Gew.-%, bezogen auf das Gesamtgewicht des Produkts, umfasst.

5. Produkt gemäß einem beliebigen der Ansprüche 1 bis 4, wobei das Verhältnis von Erbsenstärke / Kartoffelstärke im Bereich von 1/1 bis 1/4 liegt.

6. Produkt gemäß einem beliebigen der Ansprüche 1 bis 5, wobei in dem texturierten Meeresfrüchte-Analogprodukt fleisch- oder sojabasierte Produkte in einer Menge von weniger als 1 Gew.-% vorliegen, bezogen auf das Gesamtgewicht des Produkts.

7. Produkt gemäß einem beliebigen der Ansprüche 1 bis 6, wobei das texturierte Meeresfrüchte-Analogprodukt mindestens 30 Gew.-% an Fischpaste, bezogen auf das Gesamtgewicht des Produkts, vorzugsweise mindestens 45 Gew.-% an Fischpaste, insbesondere mindestens 60 Gew.-% an Fischpaste, bezogen auf das Gesamtgewicht des Produkts, umfasst.

8. Produkt gemäß einem beliebigen der Ansprüche 1 bis 7, wobei es sich bei dem texturierten Meeresfrüchte-Analogprodukt um Surimi handelt.

9. Produkt gemäß einem beliebigen der Ansprüche 1 bis 8, wobei das texturierte Meeresfrüchte-Analogprodukt sterilisiert oder pasteurisiert ist.

10. Verfahren zur Herstellung eines texturierten Meeresfrüchte-Analogprodukts gemäß einem beliebigen der Ansprüche 1 bis 9, wobei das Verfahren die Schritte des Herstellens der Grundmischung, welche Wasser, Fischpaste, Erbsenstärke, Kartoffelstärke und Zusatzstoffe wie etwa Öl, Salz und Zucker umfasst; und anschließend das Garen der Mischung umfasst, um auf die Weise ein Meeresfrüchte-Analogprodukt zu erhalten.

11. Verfahren zur Herstellung eines texturierten Meeresfrüchte-Analogprodukts gemäß Anspruch 10, wobei das texturierte Meeresfrüchte-Analogprodukt über eine Zeitdauer im Bereich von 10 bis 30 Minuten, insbesondere von 15 bis 25 Minuten, gegart wird.

12. Verfahren zur Herstellung eines texturierten Meeresfrüchte-Analogprodukts gemäß Anspruch 10 oder 11, wobei das texturierte Meeresfrüchte-Analogprodukt in einer Dampfbehandlungsvorrichtung gegart wird.

13. Verwendung einer Kombination aus Erbsenstärke und Kartoffelstärke, um Eiklar in einem texturierten Meeresfrüchte-Analogprodukt zu ersetzen, wobei das Verhältnis von Erbsenstärke zu Kartoffelstärke im Bereich von 2/1 bis 1/6, vorzugsweise von 1/1 bis 1/4 liegt.

14. Verwendung gemäß Anspruch 13, wobei das texturierte Meeresfrüchte-Analogprodukt mindestens 30 Gew.-% an Fischpaste, vorzugsweise mindestens 45 Gew.-% an Fischpaste, insbesondere mindestens 60 Gew.-% an Fischpaste, bezogen auf das Gesamtgewicht des Produkts, umfasst.

15. Verwendung gemäß Anspruch 13 oder 14, wobei es sich bei dem texturierten Meeresfrüchte-Analogprodukt um Surimi handelt.

## Revendications

1. Produit texturé analogue de fruits de mer sensiblement exempt de blanc d'œuf comprenant de 0,5 à 10 % en poids d'amidon de pois et de 0,5 à 10 % en poids d'amidon de pommes de terre, sur la base du poids total du produit, le rapport amidon de pois/amidon de pommes de terre étant compris entre 2/1 et 1/6 et le blanc d'œuf étant présent en une quantité inférieure à 1 % en poids sur la base du poids total du produit.

2. Produit texturé analogue de fruits de mer selon la revendication 1, le blanc d'œuf étant présent en une quantité inférieure à 0,9 % en poids, 0,8 % en poids, 0,7 % en poids, 0,6 % en poids, le plus préférablement inférieure à 0,5 % en poids sur la base du poids total du produit.

3. Produit texturé analogue de fruits de mer selon la revendication 1 ou la revendication 2, ledit produit texturé analogue de fruits de mer comprenant de 2,5 à 10 % en poids d'amidon de pois sur la base du poids total du produit, préférablement de 0,5 à 8 % en poids ou de 2,5 à 8 % en poids, plus préférablement de 2,5 à 5 % en poids, sur la base du poids total du produit.

4. Produit texturé analogue de fruits de mer selon l'une quelconque des revendications 1 à 3, ledit produit texturé analogue de fruits de mer comprenant de 2,5 à 10 % en poids d'amidon de pommes de terre sur la base du poids total du produit, préférablement de 0,5 à 8 % en poids ou de 2,5 à 8 % en poids, plus préférablement de 2,5 à 5 % en poids, sur la base du poids total du produit.

5. Produit selon l'une quelconque des revendications 1 à 4, le rapport amidon de pois/amidon de pommes de terre étant compris entre 1/1 et 1/4.

6. Produit selon l'une quelconque des revendications 1 à 5, les produits à base de viande ou de soja étant présents dans le produit texturé analogue de fruits de mer en une quantité inférieure à 1 % en poids sur la base du poids total du produit.

7. Produit selon l'une quelconque des revendications 1 à 6, ledit produit texturé analogue de fruits de mer comprenant au moins 30 % en poids de pâte de poisson sur la base du poids total du produit, préférablement au moins 45 % en poids de pâte de poisson, plus préférablement au moins 60 % en poids de pâte de poisson sur la base du poids total du produit.

8. Produit selon l'une quelconque des revendications 1 à 7, le produit texturé analogue de fruits de mer étant un surimi.

9. Produit selon l'une quelconque des revendications 1 à 8, ledit produit texturé analogue de fruits de mer étant stérilisé ou pasteurisé.

10. Procédé pour la préparation d'un produit texturé analogue de fruits de mer selon l'une quelconque des revendications 1 à 9, ledit procédé comprenant les étapes de préparation du mélange de base comprenant de l'eau, de la pâte de poisson, de l'amidon de pois, de l'amidon de pommes de terre, et des additifs tels qu'une huile, du sel et du sucre ; et subséquemment de cuisson dudit mélange, obtenant ainsi un produit analogue de fruits de mer.

11. Procédé pour la préparation d'un produit texturé analogue de fruits de mer selon la revendication 10, ledit produit texturé analogue de fruits de mer étant cuit pendant un temps compris entre 10 et 30 minutes, plus préférablement entre 15 et 25 minutes.

12. Procédé pour la préparation d'un produit texturé analogue de fruits de mer selon la revendication 10 ou 11, ledit produit texturé analogue de fruits de mer étant cuit dans un appareil de cuisson à la vapeur.

13. Utilisation d'une combinaison d'amidon de pois et d'amidon de pommes de terre pour remplacer le blanc d'œuf dans un produit texturé analogue de fruits de mer, le rapport de l'amidon de pois sur l'amidon de pommes de terre étant compris entre 2/1 et 1/6, préférablement entre 1/1 et 1/4.

14. Utilisation selon la revendication 13, ledit produit texturé analogue de fruits de mer comprenant au moins 30 % en poids de pâte de poisson, préférablement au moins 45 % en poids de pâte de poisson, plus préférablement au moins 60 % en poids de pâte de poisson sur la base du poids total du produit.

15. Utilisation selon la revendication 13 ou 14, ledit produit texturé analogue de fruits de mer étant un surimi.
